# FASCICULE DE BREVET EUROPEEN

(11) **EP 3 329 527 B1**
(45) Date de publication et mention de la délivrance du brevet: **17.02.2021**
(21) Numéro de dépôt: 16745441.2
(22) Date de dépôt: 25.07.2016
(51) Int. Cl.: H01M 2/02, H01M 2/16, H01M 2/26, H01M 2/34, H01M 10/0525, H01M 10/0587

(54) **ACCUMULATEUR AU LITHIUM A SÛRETE DE FONCTIONNEMENT AMELIOREE PAR UN DISPOSITIF COUPE-CIRCUIT INTEGRE**
LITHIUMSPEICHERBATTERIE MIT INTEGRIERTEM SCHUTZSCHALTER FÜR VERBESSERTE BEDIENSICHERHEIT
LITHIUM STORAGE BATTERY WITH INTEGRATED CIRCUIT-BREAKER FOR IMPROVED OPERATING SAFETY

(30) Priorité: 28.07.2015 FR 1557191
(43) Date de publication de la demande: 06.06.2018
(73) Titulaire: Commissariat à l'Énergie Atomique et aux Énergies Alternatives, 75015 Paris (FR)
(72) Inventeur: DEWULF, Frédéric, 38500 Voiron (FR); JOST, Pierre, 38220 Vizille (FR)
(74) Mandataire: Nony
(86) Numéro de dépôt international: PCT/EP2016/067683
(87) Numéro de publication internationale: WO 2017/017064

(56) Documents cités:
- EP-A1- 2 654 105
- US-A1- 2010 159 308
- US-A1- 2011 123 845
- US-A1- 2012 114 979
- US-A1- 2013 196 187
- US-A1- 2013 196 191

## Description

### Domaine technique

La présente invention concerne le domaine des générateurs électrochimiques au lithium, qui fonctionnent selon le principe d'insertion ou de désinsertion, ou autrement dit intercalation- désintercalation, de lithium dans au moins une électrode.

Elle concerne plus particulièrement un accumulateur électrochimique au lithium comportant au moins une cellule électrochimique constituée d'une anode et d'une cathode de part et d'autre d'un séparateur imprégné d'électrolyte, deux collecteurs de courant dont un est relié à l'anode et l'autre à la cathode, et un boitier de forme allongée selon un axe longitudinal (X), le boitier étant agencé pour loger la cellule électrochimique avec étanchéité tout en étant traversé par une partie des collecteurs de courant formant les bornes de sortie, aussi appelés pôles.

Le séparateur peut être constitué d'un ou plusieurs films.

Le boitier peut comporter un couvercle et un conteneur, usuellement appelé godet, ou comporter un couvercle, un fond et une enveloppe latérale assemblée à la fois au fond et au couvercle,
La présente invention vise la réalisation d'un dispositif de sécurité de type court-circuit intégré à l'accumulateur.

Par « fonctionnement anormal d'un accumulateur», on entend dans le cadre de l'invention, des conditions d'utilisation de l'accumulateur dans une gamme de courant et/ou de température extrême, qui va au-delà la gamme des conditions d'ambiance spécifiées par le concepteur ou le fabricant d'accumulateur.

Typiquement, il peut s'agir de cas de surcharge d'un accumulateur à des courants supérieurs au courant nominal de charge spécifié, jusqu'à un seuil de tension le plus souvent supérieur au seuil nominal de tension spécifié. A titre d'exemple, cela se produit au-dessus d'une valeur de tension de 3,6V pour un couple électrochimique de matériaux d'électrodes au phosphate de fer lithié LiFePO₄ (LFP) et en graphite ou au-dessus de 4,2 V pour les couples électrochimiques oxyde de cobalt lithié LiCoO2/graphite et LiNi_{0.33}Mn_{0.33}Co_{0.33}O₂ (NMC)/graphite.

Il peut s'agir également de cas de dégradation de la performance de l'accumulateur dû à son vieillissement avancé au-delà de la limite préconisée par le fabricant et/ou dû à des conditions anormales d'utilisations, telles que le dépassement des limites haute et basse du seuil de tension, des courants de charge ou décharge trop élevés, des températures d'utilisations extrêmes non compatibles avec les caractéristiques de l'accumulateur,....

### Art antérieur

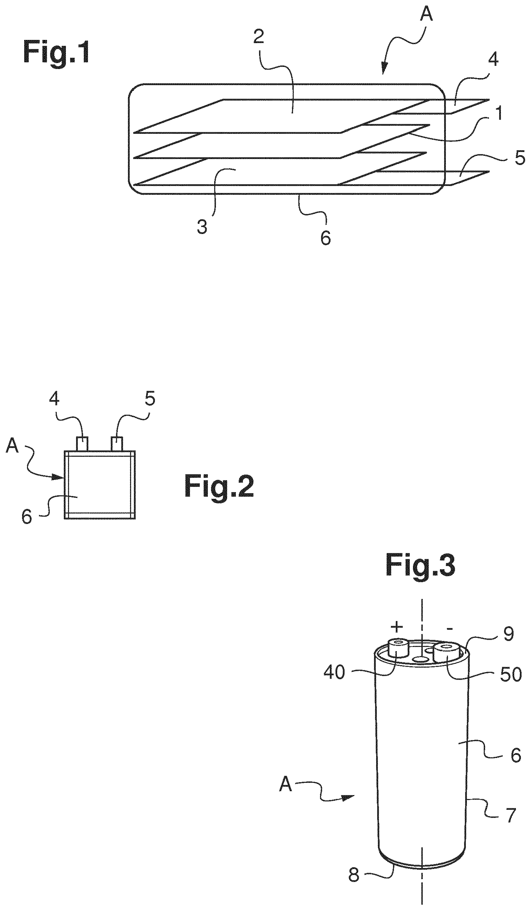

Telle qu'illustrée schématiquement en figures 1 et 2, une batterie ou accumulateur lithium-ion comporte usuellement au moins une cellule électrochimique C constituée d'un séparateur imprégné d' un constituant électrolyte 1 entre une électrode positive ou cathode 2 et une électrode négative ou anode 3, un collecteur de courant 4 connecté à la cathode 2, un collecteur de courant 5 connecté à l' anode 3 et enfin, un emballage 6 agencé pour contenir la cellule électrochimique avec étanchéité tout en étant traversé par une partie des collecteurs de courant 4, 5, formant les bornes de sortie.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde manganèse lithié, éventuellement substitué, LiMn₂O₄ ou un matériau à base de LiNiₓMn_{y}Co_{z}O₂ avec x+y+z = 1, tel que LiNi_{0.33}Mn_{0.33}Co_{0.33}O₂, ou un matériau à base de LiNiₓCo_{y}Al_{z}O₂ avec x+y+z = 1, LiMn₂O₄, LiNiMnCoO₂ ou l'oxyde de nickel cobalt aluminium lithié LiNiCoAlO₂.

L'électrode négative ou anode est très souvent constituée de carbone, graphite ou en Li₄TiO₅O₁₂ (matériau titanate), éventuellement également à base de silicium ou à base de lithium, ou à base d'étain et de leurs alliages ou de composite formé à base de silicium.

L'anode et la cathode en matériau d'insertion au Lithium peuvent être déposées selon une technique usuelle sous la forme d'une couche active sur une feuille métallique constituant un collecteur de courant.

Le collecteur de courant connecté à l'électrode positive est en général en aluminium.

Le collecteur de courant connecté à l'électrode négative est en général en cuivre, en cuivre nickelé ou en aluminium.

Traditionnellement, une batterie ou accumulateur Li-ion utilise un couple de matériaux à l'anode et à la cathode lui permettant de fonctionner à un niveau de tension élevé, typiquement autour de 3,6 Volt.

Une batterie ou accumulateur Li-ion comporte un emballage rigide ou boitier lorsque les applications visées sont contraignantes où l'on cherche une longue durée de vie, avec par exemple des pressions à supporter bien supérieures et un niveau d'étanchéité requis plus strict, typiquement inférieure à 10⁻⁶ mbar.l/s d'hélium, ou dans des milieux à fortes contraintes comme le domaine aéronautique ou spatial. L'avantage principal des emballages rigides est ainsi leur étanchéité élevée et maintenue au cours du temps du fait que la fermeture des boitiers est réalisée par soudure, en générale par soudure au laser.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique. Des formes prismatiques de boitiers ont également déjà été réalisées.

Un des types de boitier rigide de forme cylindrique, usuellement fabriqué pour un accumulateur Li-ion de forte capacité et à durée de vie supérieure à 10 ans, est illustré en figure 3.

Le boitier 6 d'axe central X comporte une enveloppe latérale cylindrique 7, un fond 8 à une extrémité, un couvercle 9 à l'autre extrémité. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle.

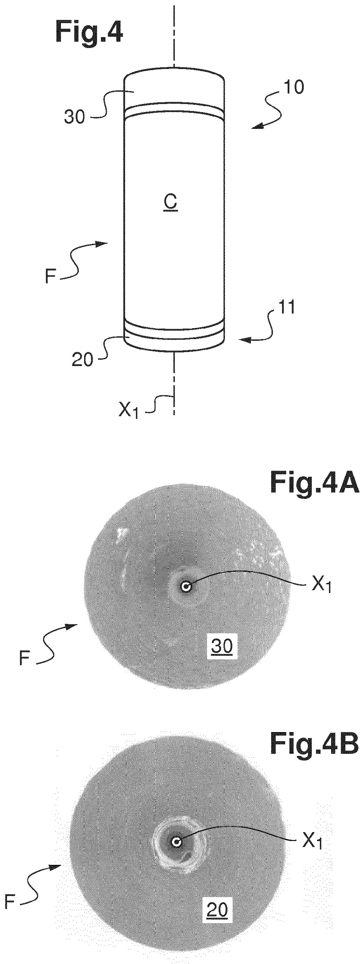

On a reproduit aux figures 4 à 4B les photographies d'un faisceau électrochimique F de forme allongée selon un axe central X1 et comportant une seule cellule électrochimique C telle qu'elle est usuellement enroulée par bobinage avant les étapes de logement dans un boitier, de raccordement électrique aux bornes de sortie de l'accumulateur et son imprégnation par un électrolyte. La cellule C est constituée d'une anode 3 et d'une cathode 4 de part et d'autre d'un séparateur (non visible) adapté pour être imprégné de l'électrolyte. Comme visible sur ces figures 4 à 4B, le faisceau F a une forme cylindrique allongée selon un axe longitudinal X1, avec à l'une 10 de ses extrémités latérales, des bandes 30 non revêtues de l'anode 3 et à l'autre 11 de ses extrémités latérales des bandes 20 non revêtues de la cathode 2.

Par « bandes non revêtues », on entend ici et dans le cadre de l'invention, les portions des feuilles métalliques, aussi appelés feuillards, formant les collecteurs de courant, qui ne sont pas recouvertes d'un matériau d'insertion au lithium.

Une fois le faisceau réalisé, il est nécessaire de procéder à son raccordement aux deux bornes de sortie de polarité différente de l'accumulateur.

Les bandes 20, 30 non revêtues de la cathode 2 et de l'anode 3 sont ainsi pliées, rabattues et/ou tassées afin d'obtenir à chaque extrémité du faisceau un socle destiné à être soudé à un collecteur de courant.

Une méthode particulièrement avantageuse est divulguée dans la demande de brevet WO 2015/044820 au nom de la demanderesse : cette méthode combine un rabattement avec déformation plastique d'au moins une partie des bandes non revêtues et un tassage axial de ces bandes.

Une fois qu'un socle est obtenu à chaque extrémité du faisceau, on procède à son liaison mécanique et électrique par soudure avec un collecteur de courant.

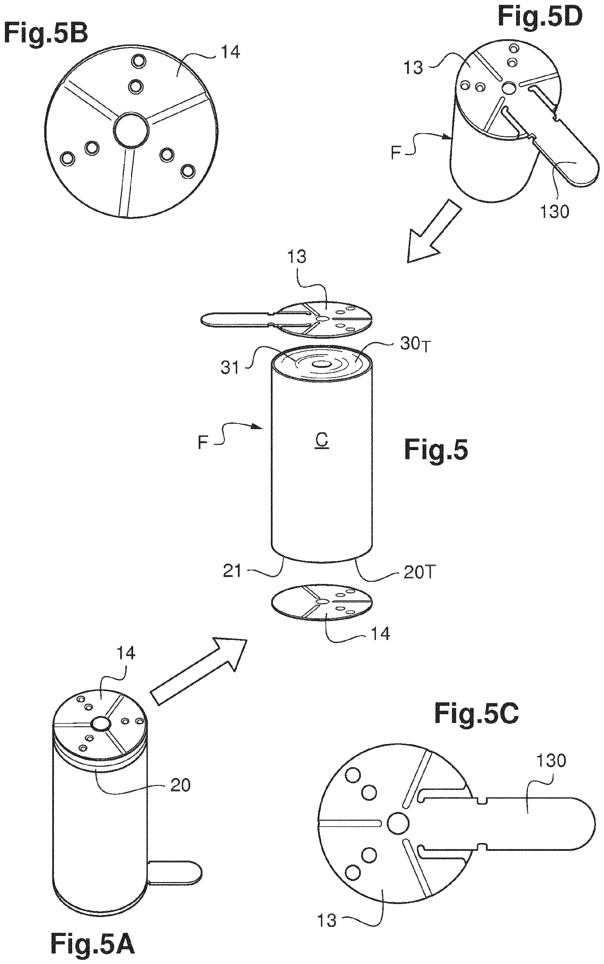

Ainsi, comme illustré aux figures 5, 5A et 5B, on soude à l'une des extrémités latérales 11 du faisceau, le socle 21 formé par la partie tassée 20T de la cathode (rives positives) avec un collecteur de courant 14, typiquement sous la forme d'un disque plein, lui-même destiné à être soudé par la suite avec le fond 8 du boitier 6 d'accumulateur.

On procède de la même manière à l'autre des extrémités latérales 10 du faisceau, le socle 31 formé par la partie tassée 30T de l'anode (rives négatives) avec une partie de collecteur de courant 13 usuel sous la forme d'un disque plein percé en son centre et d'une languette 130 faisant saillie latéralement du disque 13 (figures 5, 5C, 5D).

Pour finaliser la réalisation définitive de l'accumulateur, on introduit le faisceau avec le collecteur 13 dans un récipient rigide en aluminium formant uniquement l'enveloppe latérale 7 du boitier 6 ou formant un godet constitué à la fois de l'enveloppe latérale 7 et du fond 8 du boitier 6. On veille en particulier lors de cette étape à ce que la languette 130 ne gêne pas l'introduction. Pour ce faire, on replie celle-ci avantageusement vers le haut.

On soude alors le collecteur 14 avec le fond 8 du boitier 6.

On soude le collecteur 13 à un pôle négatif 50 formant une traversée d'un couvercle 9 de boitier 6.

On soude alors le couvercle 9 au récipient rigide métallique 7.

Puis, on effectue une étape de remplissage du boitier 6 à l'aide d'un électrolyte, au travers d'une ouverture débouchante non représentée qui est pratiquée dans le couvercle 9. La réalisation de l'accumulateur Li-ion prend fin par le bouchage de l'ouverture de remplissage.

Un objectif des fabricants d'accumulateurs est d'augmenter l'autonomie d'une cellule constituant l'accumulateur ou leur aptitude à pouvoir fonctionner sous des régimes de puissance élevés tout en améliorant leur durée de vie, i.e. leur nombre de cycles possible, leur légèreté et les coûts de fabrication de ces composants.

Les voies d'améliorations des accumulateurs Li-ion concernent, majoritairement, la nature des matériaux et les méthodes d'élaboration des composants de cellule électrochimique.

Une autre voie d'amélioration possible concerne la sécurité des accumulateurs Li-ion, qui peut être d'autant plus importante à assurer pour des accumulateurs à grande densité d'énergie.

Ainsi, les inventeurs ont été amener à concevoir des accumulateurs Li-ion, de forte capacité, typiquement capacité supérieure à 70Ah pour une densité d'énergie massique élevée, typiquement supérieure ou égale à 135 Wh/Kg et une densité d'énergie volumique également élevée typiquement supérieure ou égale à 265 Wh/L.

Une première approche pourrait consister à reconduire les règles de conception de dispositifs de sécurité présents sur des accumulateur de moindre capacité et/ou de moindre densité d'énergie, tels qu'un opercule de sécurité permettant la mise à l'air libre en cas de montée de la pression interne à l'accumulateur au-dessus d'une valeur seuil importante, typiquement de 15 bars.

Or, les inventeurs ont pensé que la réactivité potentiellement élevée d'un accumulateur de plus forte capacité, typiquement supérieure à 30 Ah, nécessite d'implanter des moyens de protection supplémentaire de type fonctionnant selon un principe de coupe-circuit qui permet de stopper le passage du courant en cas de surpression interne pouvant éventuellement conduire à un évènement redouté de type feu ou explosion de l'accumulateur.

Les inventeurs ont alors fait l'inventaire de l'ensemble des dispositifs de sécurité de type coupe-circuit existants pour savoir si certains pouvaient être reproduits ou adaptés à leurs accumulateurs de forte capacité et densité d'énergie élevée.

Le brevet FR 2 977 379 divulgue un accumulateur dont le fond du conteneur (boitier) comprend une partie fragilisée qui se rompt en cas de surpression induite par les gaz internes à l'accumulateur. Ce brevet indique que la rupture de cette partie fragilisée interrompt la connexion électrique entre une membrane conductrice déformable, agencée contre le fond du conteneur. Or, la solution divulguée présente un risque de non fonctionnement. En effet, d'une part il faut assurer une rupture complète sur toute la périphérie de la partie fragilisée pour réaliser effectivement le coupe-circuit. D'autre part, il est nécessaire d'assurer qu'aucun contact (ou reprise de contact) ne soit possible entre la membrane déformable et la paroi de fond du conteneur au niveau de la partie fragilisée. Or, cela parait fortement discutable entre ces deux pièces conductrices, telles que divulguées dans ce brevet.

Le brevet EP 2270899 B1 et la demande de brevet US 2012/007062 divulguent chacun un accumulateur Li-ion dont le fond du conteneur (boitier) comprend une partie de forme circulaire rompt en cas de surpression interne à l'accumulateur, la rupture de cette partie circulaire provoquant la mise à l'air libre des gaz puis la déconnexion électrique entre le fond du boitier et l'extrémité du faisceau électrochimique en regard.

La demande de brevet EP 1626456 décrit également un accumulateur Li-ion dont la paroi du fond du boitier présente une zone amincie, supposée avoir une valeur sensiblement égale à 20% de l'épaisseur de la paroi comme stipulé en revendication 11, afin de rompre en cas de surpression interne à l'accumulateur et ainsi interrompre toute connexion électrique entre ladite paroi et l'extrémité du faisceau électrochimique en regard. A la lecture de ce document, on peut se poser la question de la réalité de fonctionnement du coupe-circuit divulgué compte-tenu de la difficulté à obtenir l'amincissement visé et de la difficulté à obtenir une reproductibilité.

La demande de brevet US 2012/114979 divulgue un accumulateur électrochimique dans lequel la fonction coupe-circuit sous l'effet de la surpression des gaz en interne du boitier de l'accumulateur est assurée au niveau de la borne de sortie formée par traversée sur le couvercle du boitier de l'accumulateur, avec en outre au-delà d'un certain seuil un relâchement des gaz en surpression vers l'extérieur. Une fois les gaz relâchés à l'extérieur, il y a un risque de reprise de courant, car la pièce qui rompt localement peut tout-à-fait venir se rabattre sur le collecteur de courant et donc reconnecter le faisceau avec la borne de sortie.

La demande US 2010/0159308 A1 porte sur un accumulateur électrochimique comportant un dispositif coupe-circuit agencé entre le fond du boîtier de l'accumulateur et un collecteur de courant. Le fond du boîtier a une forme concave vers l'intérieur du boîtier et comprend au moins une entaille centrale et une entaille périphérique En cas de surpression, les entailles permettent une déformation élastique et une rupture du fond du boîtier.

La demande EP 2 654 105 Al concerne un système de détection de rupture d'un opercule d'accumulateur adapté pour se désolidariser du reste de l'accumulateur en cas de surpression.

Toutes les demandes de brevet/brevets précités présentent en outre des inconvénients majeurs que l'on peut énumérer comme suit :
- en cas de coupe-circuit effectivement réalisé, la reprise de courant reste toujours possible depuis l'extérieur de l'accumulateur par simple contact sur la zone centrale inférieur du conteneur, ce qui est contraire à un objectif de sécurité affiché ;
- toutes les solutions proposées impliquent nécessairement l'ouverture physique du boitier et donc de l'accumulateur, par mise à l'air libre avec les risques inhérents de fuites d'électrolyte et d'évacuation de gaz potentiellement toxiques dans l'environnement extérieur.

Il existe donc un besoin d'améliorer la réalisation d'un dispositif de sécurité de type coupe-circuit d'un accumulateur au lithium en cas de surpression des gaz internes à l'accumulateur, notamment en vue d'éviter, une fois le dispositif de sécurité déclenché, toute reprise de contact électrique (courant) depuis l'extérieur de l'accumulateur et d'éviter la mise à l'air libre de l'intérieur de l'accumulateur au moins jusqu'à une certaine valeur de surpression interne.

Le but de l'invention est de répondre au moins en partie à ce besoin.

### Exposé de l'invention

Pour ce faire, l'invention concerne, sous l'un de ses aspects, un accumulateur électrochimique (A) selon la revendication 1.

Autrement dit, l'invention consiste à définir un dispositif de coupe-circuit avec une paroi de fond de boitier qui se déforme dans le domaine plastique et simultanément une ligne d'amorce de rupture réalisée autour de la portion centrale du collecteur qui peut se déchirer pour séparer électriquement cette portion centrale liée au fond du boitier et la surface externe principale du collecteur de courant liée à une extrémité du faisceau électrochimique.

Ainsi, la paroi du fond du boitier se déforme de plus en plus au fur et à mesure que la pression interne augmente.

Une fois la déconnexion réalisée, la paroi du fond reste bombée du fait de sa déformation plastique, le collecteur de courant reste connecté au fond puisque soudés ensemble par leurs parties centrales. En revanche, le fond est désolidarisé et donc déconnecté électriquement de l'extrémité inférieure du faisceau électrochimique F, le ou les éléments d'isolation électrique autour des portions centrales garantissant par ailleurs l'isolation électrique.

Une fois le déclenchement du coupe-circuit selon l'invention réalisé, la sécurité de l'accumulateur est garantie, car il n'est plus possible pour un utilisateur de faire passer du courant entre les deux bornes positive et négative de l'accumulateur.

En outre, à la coupure du circuit électrique l'accumulateur reste étanche puisque contrairement aux dispositifs de l'état de l'art le fond du boitier reste physiquement intègre même si déformé plastiquement.

Selon une variante de réalisation, l'accumulateur comprend en tant qu'éléments isolants électriques :
- une rondelle annulaire, de préférence en Kapton®, intercalée entre le collecteur de courant et le fond du boitier.
- un film en plastique entourant le bord périphérique du feuillard d'électrode.

Le film en plastique est avantageusement réalisé en un matériau choisi parmi le polyimide (PI), polyétherimide (PEI), polypropylène (PP) ou polyéthylène (PE).

De manière alternative, on peut prévoir une pièce d'isolation électrique recouvrant à la fois le bord périphérique du feuillard d'électrode et l'extrémité du faisceau.

De préférence, l'épaisseur restante dans la ligne d'amorce de rupture est comprise entre 30µm et 150 µm.

De préférence encore, l'épaisseur E de la paroi du fond est comprise entre 0,5 et 2,0 mm pour un fond en matériau à base d'aluminium.

Avantageusement, la valeur seuil prédéterminée de la pression au-delà de laquelle le fond du boitier subit une déformation plastique est supérieure ou égale à 5 bars.

L'accumulateur comprend en outre avantageusement un opercule de mise à l'air libre dont l'ouverture est provoquée dès lors que la pression en interne atteint une autre valeur seuil prédéterminée, de préférence supérieure à 15 bars.

L'accumulateur peut être de forme cylindrique avec un collecteur de courant sous la forme d'un disque d'épaisseur de préférence comprise entre 0,3 et 0,8mm.

Selon une caractéristique avantageuse, le boitier et le collecteur de courant sont en un matériau à base d'aluminium.

Selon un mode de réalisation avantageux, l'accumulateur est configuré pour rester étanche après déconnexion électrique entre le collecteur de courant lié au faisceau et le fond du boitier pour un niveau de pression interne ne dépassant pas une valeur seuil prédéterminée, de préférence inférieure ou égal à 12 bars.

Selon un mode de réalisation avantageux, le faisceau électrochimique est constitué d'une seule cellule électrochimique enroulée sur elle-même par bobinage.

De préférence:
- le matériau d'électrode(s) négative(s) est choisi dans le groupe comportant le graphite, le lithium, l'oxyde de titanate Li₄TiO₅O₁₂; ou à base de silicium ou à base de lithium, ou à base d'étain et de leurs alliages ;
- le matériau d'électrode(s) positive(s) est choisi dans le groupe comportant le phosphate de fer lithié LiFePO₄, l'oxyde de cobalt lithié LiCo02, l'oxyde manganèse lithié, éventuellement substitué, LiMn₂O₄ ou un matériau à base de LiNiₓMn_{y}Co_{z}O₂ avec x+y+z = 1, tel que LiNi_{0.33}Mn_{0.33}CO_{0.33}O₂, ou un matériau à base de LiNiₓCo_{y}Al_{z}O₂ avec x+y+z = 1, LiMn₂O₄, LiNiMnCoO₂ ou l'oxyde de nickel cobalt aluminium lithié LiNiCoAlO_{2.}.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective d'un accumulateur lithium-ion selon l'état de l'art avec son emballage rigide constitué d'un boitier ;
- la figure 4 est une vue photographique en perspective d'un faisceau électrochimique d'un accumulateur lithium-ion selon l'état de l'art, le faisceau étant constitué d'une seule cellule électrochimique enroulée sur elle-même par bobinage;
- la figure 4A est une vue photographique de dessus d'une extrémité latérale du faisceau électrochimique selon la figure 4 ;
- la figure 4B est une vue photographique de dessus de l'autre extrémité latérale du faisceau électrochimique selon la figure 4 ;
- les figures 5 et 5A à 5D sont des reproductions photographiques montrant en perspective et en vue de dessus chacun des deux collecteurs de courant soudé à l'une des extrémités latérales d'un faisceau électrochimique d'un accumulateur Li-ion;
- les figures 6A et 6B sont des vues en coupe longitudinale et en perspective du fond de boitier d'un accumulateur au lithium, ces figures montrant un exemple de dispositif de sécurité de type coupe-circuit selon l'invention en fonctionnement normal de l'accumulateur c'est-à-dire sans que le dispositif de sécurité n'ait été déclenché;
- les figures 7A et 7B sont des vues en coupe longitudinale et en perspective du fond de boitier d'un accumulateur au lithium, ces figures montrant un exemple de dispositif de sécurité de type coupe-circuit selon l'invention une fois que le dispositif de sécurité a été déclenché;
- la figure 7C est une vue photographique du fond d'un boitier d'un accumulateur Li-ion selon l'invention, montrant le cordon de soudure entre la portion centrale du collecteur de courant selon l'invention et le fond du boitier;
- les figures 8A et 8B sont des vues de détail en coupe et en perspective montrant des variantes de réalisation de la ligne d'amorce de rupture de la partie centrale du collecteur de courant selon l'invention ;
- la figure 9 est une vue photographique d'un collecteur de courant en appui sur le faisceau d'un accumulateur Li-ion selon l'invention, montrant la ligne d'amorce de rupture selon l'invention;
- la figure 10 est une vue photographique montrant des éléments isolants électriques mis en place conformément à l'invention sur le collecteur de courant en fond de boitier ;
- la figure 11 est une vue photographique montrant le collecteur de courant selon la figure 9 une fois la rupture de la portion centrale ;
- la figure 12 est une vue photographique en coupe montrant différents lots de collecteur de courant selon la figure 9 avec leur ligne d'amorce de rupture respective autour de leur portion centrale;
- la figure 13 est une vue en perspective d'un accumulateur Li-ion de géométrie cylindrique, de grandes dimensions à densité d'énergie élevée et forte capacité, l'accumulateur ayant été déformé sous une montée en pression interne supérieure à une valeur seuil prédéterminée, ici égale à 16 bars;
- la figure 14 illustre sous forme de courbes la déformation subie par un fond de boitier d'accumulateur selon l'invention sous l'effet de la pression interne;
- la figure 15 illustre sous forme de courbes le positionnement de la pression de fonctionnement du dispositif de coupe-circuit selon l'invention en fonction de la force moyenne de rupture de la portion centrale affaiblie préalablement par sa ligne d'amorce de rupture ;
- les figures 16 et 17 illustrent sous forme de courbes la tension, le courant et la température d'un accumulateur Li-ion à électrodes de type graphite/phosphate de fer lithié LiFePO₄, l'accumulateur ayant subi un essai de surpression interne ayant déclenché le dispositif coupe-circuit conforme à l'invention.

Par souci de clarté, les mêmes références désignant les mêmes éléments d'un accumulateur au lithium-ion selon l'état de l'art et selon l'invention sont utilisées pour toutes les figures 1 à 11.

On précise que les différents éléments selon l'invention sont représentés uniquement par souci de clarté et qu'ils ne sont pas à l'échelle.

Les figures 1 à 5D ont déjà été commentées en détail en préambule. Elles ne sont donc pas décrites ci-après.

Les feuillards métalliques supportant les matériaux d'électrodes peuvent avoir une épaisseur comprise entre 5 et 50 µm. Pour un feuillard d'anode 3, il peut s'agir avantageusement d'un feuillard en cuivre d'épaisseur de l'ordre de 12 µm. Pour un feuillard de cathode 2, il peut s'agir avantageusement d'un feuillard en aluminium d'épaisseur de l'ordre de 20 µm.

Pour améliorer la sécurité de fonctionnement d'un accumulateur Li-ion en particulier un accumulateur de densité d'énergie élevée et de forte capacité, les inventeurs proposent d'intégrer un nouveau type de dispositif coupe-circuit en fond de boitier d'accumulateur.

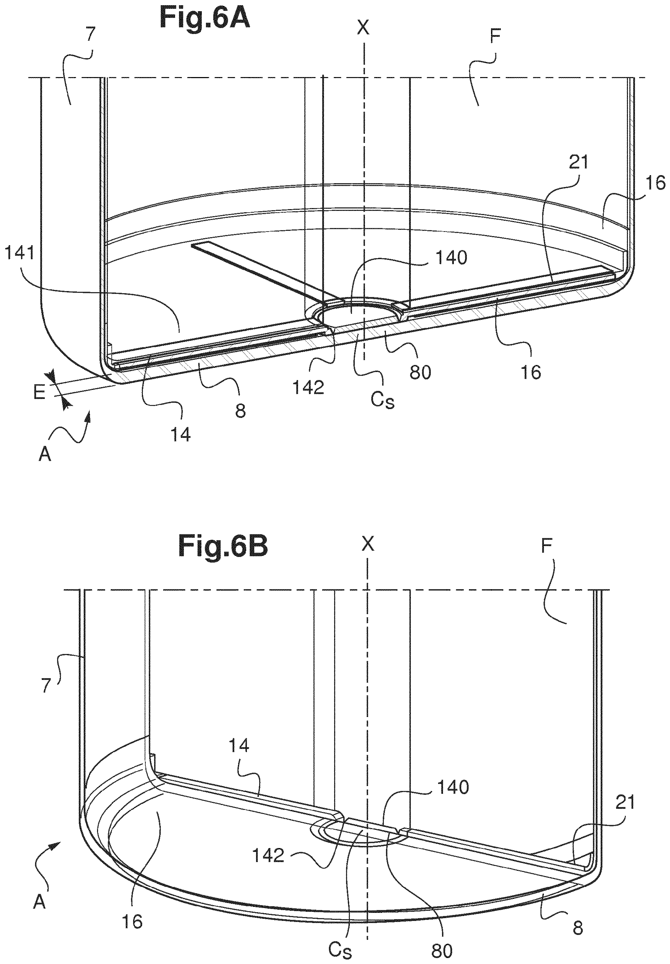

Un exemple de réalisation d'un tel coupe-circuit selon l'invention intégré à un accumulateur est montré en figures 6A et 6B.

Le faisceau F selon l'invention est donc comme celui montré aux figures 4 à 4B et a subi à chacune de ces extrémités au moins une étape de pliage, rabattement et/ou tassage axial des feuillards d'électrode. Avantageusement, le faisceau F est réalisé conformément au procédé selon la demande de brevet WO 2015/044820.

Les étapes de connexion électrique et leur enchaînement entre le faisceau électrochimique F préparé avec un socle 21, 31 à chacune de ses extrémités, et les collecteurs de courant sont réalisées essentiellement comme décrit en référence aux figures 5 à 5D.

En particulier, le collecteur de courant 13 à l'anode 3 et sa liaison électrique et mécanique et soudure à l'extrémité 31 du faisceau F peuvent être identiques à ce qui est montré en figures 5 à 5D. A titre d'exemple, le collecteur de courant 13 présente un diamètre Ø est compris entre 1 et 10 cm, une épaisseur de plaque e comprise entre 0,2 et 1,2 mm.

L'accumulateur Li-ion selon l'invention se distingue de ceux de l'art antérieur par un dispositif coupe-circuit intégré du côté du fond 8 du boitier 6 qui permet d'éviter, une fois qu'il est déclenché, toute reprise de contact électrique (courant) depuis l'extérieur de l'accumulateur et d'éviter la mise à l'air libre de l'intérieur de l'accumulateur au moins jusqu'à une certaine valeur de surpression interne.

On décrit en relation avec les figures 6A et 6B le dispositif coupe-circuit selon l'invention, avant son déclenchement.

Contrairement aux collecteurs de courant en fond de boitier d'accumulateur selon l'état de l'art, le collecteur de courant selon l'invention sous la forme d'une disque plein métallique 14 est soudé au fond 8 du boitier 6 uniquement par sa portion centrale 140. Plus précisément, cette portion centrale 140 est soudée à une portion centrale 80 du fond 8 autour de l'axe central X de l'accumulateur. Le disque 14 est de préférence en aluminium.

Le collecteur 14 en appui contre l'extrémité 21 du faisceau électrochimique.

La portion périphérique 141 autour de la portion centrale 140 du collecteur présente en outre une zone d'épaisseur moindre constituant une ligne d'amorce de rupture 142.

L'accumulateur comprend en outre, au moins un élément isolant électrique 15, 16 agencé entre le disque formant le collecteur 14 et le fond du boitier en regard, autour de leurs portions centrales 80, 140, pour isoler électriquement celles-ci l'une de l'autre.

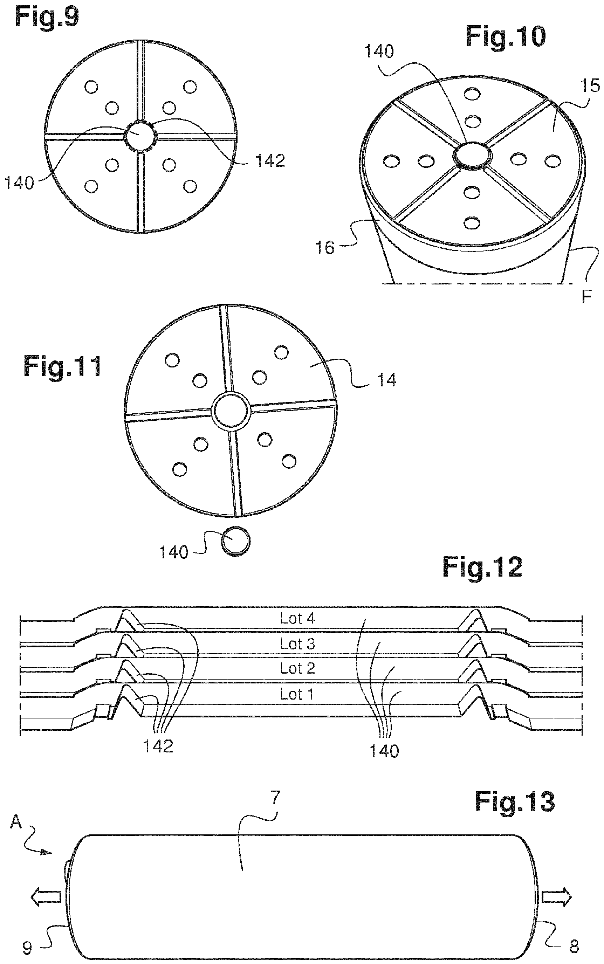

Avantageusement, comme représenté en figure 10, il est prévu deux éléments d'isolation électrique. Un de ces éléments est sous la forme d'une rondelle 15, destinée à être intercalée entre le collecteur de courant 14 et le fond du boitier. L'autre de ces éléments est un film isolant 16 entourant le bord périphérique 20 du feuillard de cathode 2.

Un autre mode de réalisation envisagé consisterait à remplacer les deux éléments rondelle 15 et film isolant 16 par une seule pièce d'isolation pour recouvrir à la fois le bord périphérique 20 du feuillard de cathode 2 et l'extrémité 21 du faisceau F.

Selon l'invention, on dimensionne à la fois l'épaisseur du fond 8 et la ligne d'amorce de rupture 142 de sorte qu'au-delà d'une valeur seuil prédéterminée de pression régnant à l'intérieur du boitier, le fond 8 subit une déformation plastique en maintenant la soudure entre la portion centrale 140 de la plaque et celle 80 du fond tout en générant une rupture de la ligne d'amorce, et par là une déconnexion électrique entre le faisceau et le fond du boitier..

Ainsi, comme décrit ci-après, on obtient une déconnexion électrique entre le faisceau électrochimique F et le fond 8 et donc on coupe le circuit électrique de l'accumulateur.

La valeur seuil prédéterminée de la pression interne à l'accumulateur peut avantageusement être égale ou supérieure à 5 bars, notamment comprise entre 5 et 10 bars.

Lorsque le boitier 6 et donc le fond 8 est réalisé en aluminium, l'épaisseur E de la paroi du fond 8 est comprise de préférence entre 0,5 et 2,0 mm, afin d'en obtenir une déformation importante dans le domaine plastique, typiquement au moins égale à 1 mm, dans une gamme de pression interne comprise entre 5 et 10 bars.

Cette gamme d'épaisseur de paroi de fond est avantageuse car elle est compatible avec les méthodes usuelles d'obtention de cette pièce en matériau aluminium standard, typiquement de série 1000, par exemple 1050 ou de série 3000, par exemple. 3003, par emboutissage ou par une technique de filage par choc.

L'épaisseur de paroi du collecteur 14 peut être comprise entre 0,3 et 0,8 mm.

De préférence, et en fonction du format de l'accumulateur, la résistance mécanique de la ligne d'amorce de rupture 142 sous une force appliquée en son centre sera comprise entre 30N, ce qui correspond à un format d'accumulateur de faible diamètre, typiquement de l'ordre de 14 mm et 140 N ou davantage pour des formats d'accumulateur de diamètre supérieur à 60 mm.

L'épaisseur de la ligne d'amorce de rupture 1425 est de préférence comprise entre 30µm et 150 µm en fonction de la surface des pièces considérées.

La pièce d'isolation 15 est avantageusement réalisée en matière d'isolation courante.

Le film d'isolation 16 est avantageusement en matière plastique, telle qu'en polyimide (PI), polyétherimide (PEI), polypropylène (PP) ou polyéthylène (PE).

On décrit maintenant les différents modes de fonctionnement d'un accumulateur Li-ion selon l'invention, en fonction du déclenchement ou non du dispositif coupe-circuit qui vient d'être décrit.

En fonctionnement normal de l'accumulateur, la pression interne pendant toute la durée de vie en utilisation de l'accumulateur reste faible à un niveau de pression habituellement compris entre 1 et 5 bars.

La conception du boitier 8 de l'accumulateur, et en particulier de l'épaisseur E du fond et de ligne d'amorce de rupture 142, prend en compte une éventuelle surpression, typiquement jusqu'à 4 bars qui peut apparaitre :
- lors d'un stockage de l'accumulateur, par exemple d'une durée élevée à température élevée, le plus souvent supérieure ou égale à + 50°C,
- lors d'un cyclage de l'accumulateur à des régimes de courants importants sur des gammes de température aussi plus ou moins élevées, typiquement à basse température inférieure ou égale à 0°C ou à haute température supérieure ou égale à 50°C : en phase de charge et de décharge, des échauffements de température peuvent alors se produire et s'accompagner éventuellement d'une génération de gaz interne en fonction de la nature du couple électrochimique des matériaux d'électrode mis en œuvre.

En fonctionnement anormal de l'accumulateur, il peut se produire une génération de gaz interne dépassant 5 bars et pouvant atteindre un niveau parfois supérieur à 15 bars ou davantage.

En cas de surpression interne élevée de l'accumulateur, typiquement une surpression supérieure à 5 bars, la paroi du fond 8 du conteneur (boitier) 6 se déforme dans le domaine plastique de façon importante, typiquement à une valeur supérieure à 1 mm.

La déformation plastique visée est définie pour obtenir une rupture de la liaison électrique existante entre l'extrémité 21 du faisceau électrochimique F, qui est positive dans l'exemple illustré et le fond 8.

En d'autres termes, la paroi du fond 8 se déforme dans le domaine plastique et simultanément la ligne d'amorce de rupture est arrachée (rompue).

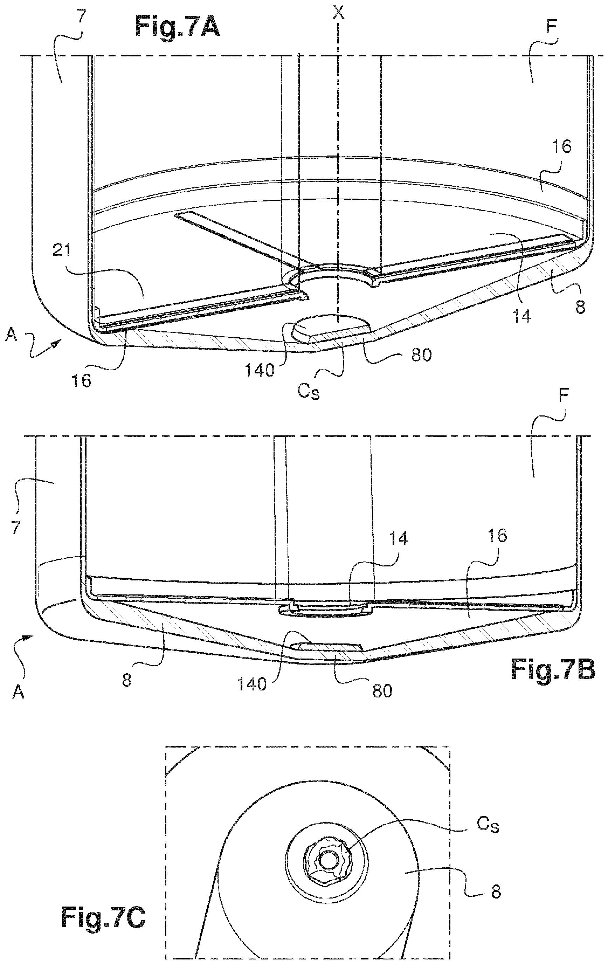

Comme illustré aux figures 7A et 7B, une fois cette déconnexion réalisée la paroi du fond 8 reste bombée du fait de sa déformation plastique, le collecteur de courant 14 reste connecté au fond 8 puisque soudés ensemble par leurs parties centrales respectives 80, 140.

En revanche, le fond 8 est désolidarisé et donc déconnecté électriquement de l'extrémité inférieure 21 du faisceau électrochimique F.

L'isolation électrique est toujours garantie par la rondelle annulaire 15 et/ou le film plastique isolant 16.

Comme détaillé par la suite, l'intérieur du boitier 8 peut rester ou non sous pression. Lorsqu'il reste sous pression, cela contribue aussi à maintenir la déformée maximale du fond 8.

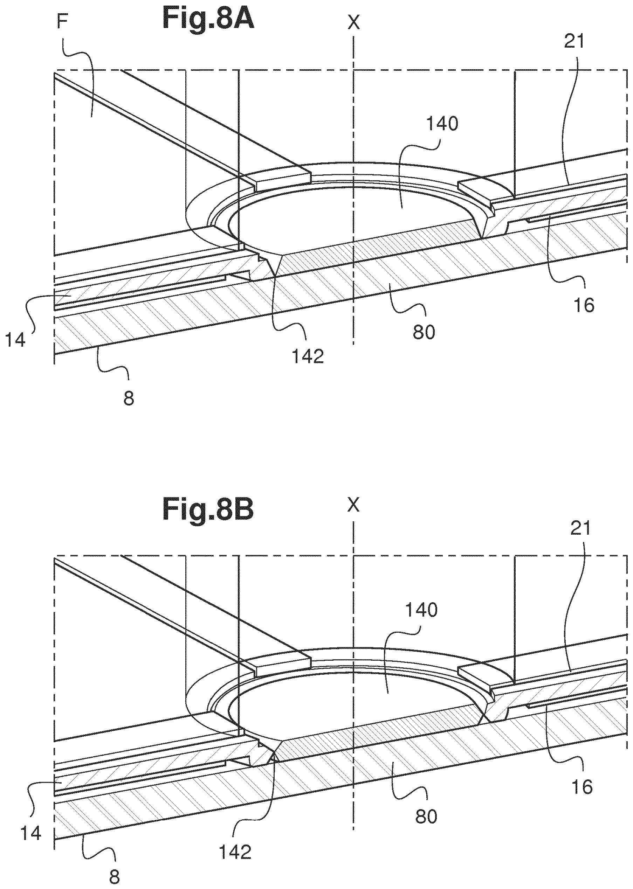

Plusieurs variantes peuvent être prévues pour la réalisation de la ligne d'amorce de rupture 142 de manière circulaire à 360° autour de la portion centrale 140. Cette amorce peut être réalisée par usinage ou par outil de frappe. Les profils possibles peuvent être un profil en V (figure 8A) et ou un profil en double V symétrique (figure 8B).

Quel que soit le profil retenu, la fragilisation de la ligne 142 est dimensionnée pour garantir l'arrachement circulaire à 360° lorsque la paroi du fond 8 se déforme plastiquement et vient exercer un effort en traction sur la portion centrale 140 du collecteur de courant 14.

On a reproduit en figure 9, la photographie du dessous d'un collecteur montrant la ligne 142 avant sa rupture.

On a reproduit en figure 10, la rondelle isolante en Kapton 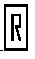 en appui contre un collecteur de courant en aluminium sous la forme d'un disque 14.

On a reproduit en figure 11, la photographie du collecteur selon la figure 9 avec la portion centrale 140 qui a été rompue.

La figure 12 montre différents lots de collecteurs 14 réalisés avec leur ligne d'amorce de rupture respective 142. Sur cet exemple illustré, les épaisseurs de la ligne affaiblie 142 vont pour la plus faible (Lot 4) de 30µm à 110µm pour la plus forte (Lot 1).

Selon un mode de réalisation avantageux, on peut munir un accumulateur Li-ion d'un opercule de ventilation de sécurité en sus du dispositif coupe-circuit selon l'invention qui vient d'être décrit.

Cet opercule de ventilation est de préférence réalisé sur le couvercle 9 de l'accumulateur.

L'ouverture de l'opercule de sécurité peut être opérée avantageusement dans une gamme de surpression interne de 16 +/-3 bars.

On décrit maintenant les différents modes de fonctionnement d'un tel accumulateur Li-ion selon l'invention, en fonction du déclenchement ou non du dispositif coupe-circuit selon l'invention et en fonction du déclenchement ou non de l'opercule de ventilation supplémentaire.

En fonctionnement normal de l'accumulateur, c'est-à-dire lorsque la pression interne est inférieure à une valeur seuil prédéterminée typiquement égale à 5 bars, la paroi du fond 8 du boitier subit peu ou pas de déformation.

La conduction électrique est garantie entre l'extrémité inférieure 21 du faisceau électrochimique F et le fond 8 connecté par la soudure entre les parties centrales respectives 80, 140 du fond et du connecteur 14.

Dans le cas d'une montée en pression interne en un temps relativement faible, typiquement une montée en pression sur plusieurs minutes de fonctionnement, typiquement de l'ordre de 15 à 20 minutes, la pression est dans une gamme comprise entre 10 et 15 bars.

Il se produit alors la déformation plastique du fond 8 du boitier 6 de l'accumulateur à une valeur suffisante pour permettre la rupture de la ligne 142 et donc la coupure de conduction électrique entre l'extrémité 21 du faisceau électrochimique F et le fond 14 qui reste par ailleurs connecté au centre du fond par la soudure avec la partie centrale 140 de ce dernier.

Le dispositif coupe-circuit selon l'invention est ainsi déclenché. La sécurité de l'accumulateur est garantie, car il n'est plus possible pour un utilisateur de faire passer du courant entre les deux bornes positive et négative de l'accumulateur.

En outre, à la coupure du circuit électrique l'accumulateur reste étanche puisque contrairement aux dispositifs de l'état de l'art le fond 8 du boitier reste intègre même si déformé plastiquement.

Dans le cas d'une montée en pression interne rapide, typiquement l'atteinte de 15 bars de surpression interne en moins de 1 minute, il est possible que la dynamique de la montée en pression mène à un effet de fonctionnement simultané à la fois du dispositif de coupe-circuit selon l'invention et de l'opercule de ventilation sécurité.

Autrement dit, dans ce cas il se produit simultanément un déclenchement du coupe-circuit selon l'invention en fond 8 du boitier 6 et l'ouverture de l'opercule de ventilation de sécurité.

La sécurité de l'accumulateur est ici aussi garantie, car il n'est plus possible pour un utilisateur de faire passer du courant entre les deux bornes positive et négative de l'accumulateur.

En outre, par l'ouverture de l'opercule de sécurité, il se produit une redescente de la pression interne de l'accumulateur à la pression atmosphérique.

La figure 13 montre à l'aide des flèches en sens opposé la déformation subie respectivement par le couvercle 9 et le fond 8 d'un boitier d'accumulateur Li-ion en cas de surpression interne à l'accumulateur.

Les inventeurs ont réalisé des essais de déformation d'un fond 8 de boitier d'un accumulateur cylindrique Li-ion conforme à l'invention, sous l'effet de la pression exercée à l'intérieur du boitier.

Les dimensions du boitier d'accumulateur sur lequel les essais ont été réalisés sont les suivantes : diamètre extérieur de 65 mm et hauteur de 230 mm.

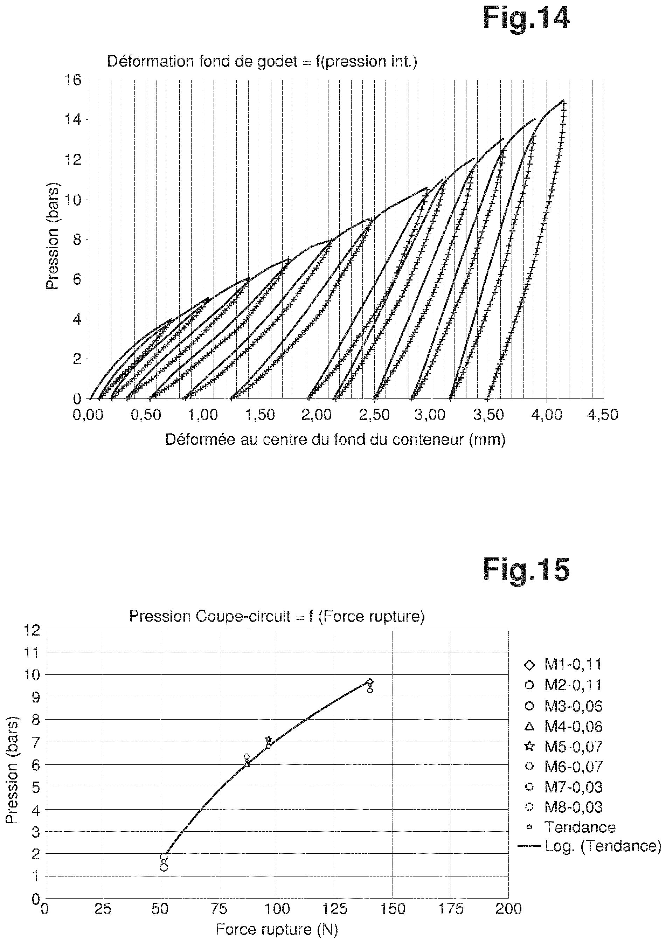

Les résultats sont montrés en figure 14 sous forme de courbes.

Il ressort de ces courbes que pour une pression interne de l'ordre de 12 bars, la déformation du fond 8 du boitier atteint environ 3,4 mm.

Les inventeurs ont réalisé d'autres essais pour valider le dispositif coupe-circuit selon l'invention qui vient d'être décrit.

Ils ont tout d'abord mis sous pression l'accumulateur au travers de la borne négative, puis ont appliqué une rampe de montée en pression de 5 bars / min.

Le signal de continuité électrique entre les deux bornes est alors enregistré : si 1 le courant passe, si 0 le courant ne passe plus.

Les résultats obtenus sont synthétisés dans le tableau ci-dessous :

| N° pièces - Epaisseur d'affaiblissement (mm) | Force moyenne de rupture de la zone centrale de collecteur (N) | Pression au dispositif de coupe-circuit (bar) | Déformation au dispositif de coupe-circuit (mm) |
|---|---|---|---|
| M1 - 0,11 | 140 | 9,50 | 2,66 |
| M2 - 0,11 | 140 | 9,30 | 2,78 |
| M3 - 0,06 | 87 | 6,60 | 1,88 |
| M4 - 0,06 | 87 | 6,00 | 1,75 |
| M5 - 0,07 | 96 | 7,00 | 2,55 |
| M6 - 0,07 | 96 | 7,27 | 2,3 |
| M7 - 0,03 | 51 | 1,7 | 0,23 |
| M8 - 0,03 | 51 | 1,8 | 0,25 |

De ce tableau, il ressort que les pièces (M7 et M8) présentant l'épaisseur d'affaiblissement la plus faible mènent au résultat de pression de déclenchement du coupe-circuit la plus basse et inversement pour les pièces (Ml et M2) d'épaisseur d'affaiblissement plus élevée.

La figure 15 illustre le comportement en test de pression appliqué aux maquettes M1 et M2 : on visualise ainsi la déformée du fond 8 de l'accumulateur jusqu'à l'ouverture de l'opercule de sécurité à la pression ici mesurée à 16,5 bars.

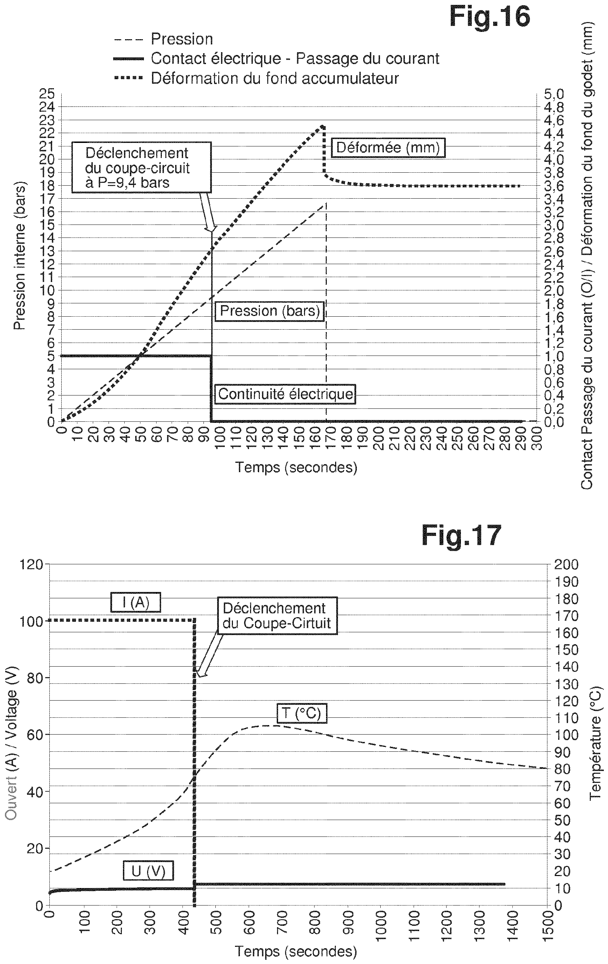

La figure 16 illustre sous forme de courbes l'évolution en fonction du temps avant et après déclenchement du coupe-circuit, respectivement de la déformée de la paroi du fond 8 d'un boitier d'accumulateur, de la pression régnant à l'intérieur de ce boitier et de la continuité électrique ou non entre les deux bornes positive et négative de l'accumulateur. Il ressort clairement de cette figure 13 que le déclenchement du dispositif coupe-circuit induit instantanément une rupture de la connexion électrique aux bornes de l'accumulateur.

La figure 17 illustre toujours sous forme de courbes l'évolution en fonction du temps respectivement du courant, de la tension et de la température au sein de l'accumulateur.

D'autres variantes et améliorations peuvent être apportées sans pour autant sortir du cadre de l'invention.

Enfin, bien que le boitier 6 dans les modes de réalisation illustrés qui viennent d'être détaillés soit en aluminium, il peut également être en acier, ou en acier nickelé. Dans une telle variante, un boitier en acier ou en acier nickelé constitue le potentiel négatif, le collecteur de courant 14 intégrant le dispositif coupe-circuit selon l'invention constituant alors une connexion au pôle négatif.

L'invention n'est pas limitée aux exemples qui viennent d'être décrits ; on peut notamment combiner entre elles des caractéristiques des exemples illustrés au sein de variantes non illustrées.

## Revendications

1. Accumulateur électrochimique (A) au lithium comportant un faisceau électrochimique (F) comprenant au moins une cellule électrochimique (C) constituée d'au moins une anode et une cathode de part et d'autre d'un électrolyte imprégné dans un séparateur, deux collecteurs de courant dont un est relié à l'anode et l'autre à la cathode, un boitier (6) de forme allongée selon un axe central (X), le boitier comportant un couvercle (9) un fond (8), une enveloppe latérale (7) assemblée à la fois au fond et au couvercle, le boitier étant agencé pour contenir le faisceau avec étanchéité tout en étant traversé par une partie des collecteurs de courant formant des bornes de sortie (40, 50), dont une passe à travers le couvercle (9) avec interposition d'un joint,
l'accumulateur étant **caractérisé en ce qu'**il comporte en outre :
- un collecteur de courant sous la forme d'une plaque métallique (14), dont la portion centrale (140) est soudée à une portion centrale (80) du fond autour de l'axe (X), le collecteur étant en appui contre l'extrémité (21) du faisceau électrochimique, la portion périphérique (141) autour de la portion centrale du collecteur présentant une zone d'épaisseur moindre constituant une ligne d'amorce de rupture (142) ;
- au moins un élément isolant électrique (15, 16), agencé entre la plaque formant le collecteur (14) et le fond du boitier en regard, autour de leurs portions centrales (80, 140), pour isoler électriquement celles-ci l'une de l'autre,
l'épaisseur du fond et la ligne d'amorce de rupture étant dimensionnées de sorte qu'au-delà d'une valeur seuil prédéterminée de pression régnant à l'intérieur du boitier, le fond subit une déformation plastique en maintenant la soudure entre la portion centrale de la plaque et celle du fond tout en générant une rupture de la ligne d'amorce, et par là une déconnexion électrique irréversible entre le faisceau et le fond du boitier, la paroi du fond (8) restant bombée du fait de sa déformation plastique une fois cette déconnexion réalisée.

2. Accumulateur électrochimique (A) selon la revendication 1, comprenant une rondelle annulaire (15), en tant qu'élément isolant électrique, intercalée entre le collecteur de courant (14) et le fond du boitier.

3. Accumulateur électrochimique (A) selon la revendication 1 ou 2, comprenant un film en plastique (16), en tant qu'élément isolant électrique, entourant le bord périphérique (20) d'un feuillard d'anode et d'un feuillard de cathode.

4. Accumulateur électrochimique (A) selon la revendication 3, le film en plastique étant réalisé en un matériau choisi parmi le polyimide (PI), polyétherimide (PEI), polypropylène (PP) ou polyéthylène (PE).

5. Accumulateur électrochimique (A) selon la revendication 1, comprenant une pièce d'isolation électrique recouvrant à la fois le bord périphérique (20) du feuillard d'électrode et l'extrémité (21) du faisceau F.

6. Accumulateur électrochimique (A) selon l'une des revendications précédentes, l'épaisseur restante dans la ligne d'amorce de rupture (142) étant comprise entre 30 µm et 150 µm.

7. Accumulateur électrochimique (A) selon l'une des revendications précédentes, l'épaisseur E de la paroi du fond (8) étant comprise entre 0,5 et 2,0 mm pour un fond en matériau à base d'aluminium.

8. Accumulateur électrochimique (A) selon l'une des revendications précédentes, la valeur seuil prédéterminée de la pression étant supérieure ou égale à 5 bars.

9. Accumulateur électrochimique (A) selon l'une des revendications précédentes, comprenant en outre un opercule de mise à l'air libre dont l'ouverture est provoquée dès lors que la pression en interne atteint une autre valeur seuil prédéterminée.

10. Accumulateur électrochimique (A) selon la revendication 9, l'autre valeur seuil prédéterminée étant supérieure à 15 bars.

11. Accumulateur électrochimique (A) selon l'une des revendications précédentes, de forme cylindrique avec un collecteur de courant (14) sous la forme d'un disque d'épaisseur.

12. Accumulateur électrochimique (A) selon la revendication 11, l'épaisseur du disque étant comprise entre 0,3 et 0,8mm.

13. Accumulateur électrochimique (A) selon l'une des revendications précédentes, le boitier (8) et le collecteur de courant (14) étant en un matériau à base d'aluminium.

14. Accumulateur électrochimique (A) selon l'une des revendications précédentes, configuré pour rester étanche après déconnexion électrique entre le collecteur de courant (14) lié au faisceau et le fond du boitier pour un niveau de pression interne ne dépassant pas une valeur seuil prédéterminée.

15. Accumulateur électrochimique (A) selon la revendication 14, la valeur seuil prédéterminée étant inférieure ou égal à 12 bars.

## Patentansprüche

1. Elektrochemischer Lithium-Akkumulator (A), welcher aufweist: ein elektrochemisches Bündel (F), das wenigstens eine elektrochemische Zelle (C) umfasst, die aus wenigstens einer Anode und einer Kathode beiderseits eines Elektrolyten besteht, mit dem ein Separator getränkt ist, zwei Stromkollektoren, von denen einer mit der Anode und der andere mit der Kathode verbunden ist, ein Gehäuse (6) von einer entlang einer Mittelachse (X) lang gestreckten Form, wobei das Gehäuse einen Deckel (9), einen Boden (8) und eine seitliche Hülle (7), die sowohl mit dem Boden als auch mit dem Deckel zusammengebaut ist, aufweist, wobei das Gehäuse dafür ausgelegt ist, das Bündel auf dichte Weise zu umschließen, wobei es gleichzeitig von einem Teil der Stromkollektoren durchquert wird, die Ausgangsanschlüsse (40, 50) bilden, von denen einer durch den Deckel (9) hindurchführt, mit Anordnung einer Dichtung dazwischen,
wobei der Akkumulator **dadurch gekennzeichnet ist, dass** er außerdem aufweist:
- einen Stromkollektor in Form einer Metallplatte (14), deren mittlerer Abschnitt (140) an einen mittleren Abschnitt (80) des Bodens um die Achse (X) herum angeschweißt ist, wobei der Kollektor am Ende (21) des elektrochemischen Bündels anliegt, wobei der Umfangsabschnitt (141) um dem mittleren Abschnitt des Kollektors herum einen Bereich geringerer Dicke aufweist, der eine Bruchinitiierungslinie (142) bildet;
- wenigstens ein elektrisch isolierendes Element (15, 16), das zwischen der den Kollektor bildenden Platte (14) und dem gegenüberliegenden Boden des Gehäuses angeordnet ist, um deren mittlere Abschnitte (80, 140) herum, um diese elektrisch voneinander zu isolieren,
wobei die Dicke des Bodens und die Bruchinitiierungslinie so bemessen sind, dass bei Überschreitung eines vorbestimmten Schwellenwertes des im Inneren des Gehäuses herrschenden Drucks der Boden eine plastische Verformung erfährt, wobei die Schweißverbindung zwischen dem mittleren Abschnitt der Platte und demjenigen des Bodens erhalten bleibt und gleichzeitig ein Bruch der Initiierungslinie erzeugt wird, und dadurch eine irreversible elektrische Trennung zwischen dem Bündel und dem Boden des Gehäuses, wobei die Wand des Bodens (8) aufgrund seiner plastischen Verformung gewölbt bleibt, nachdem diese Trennung erfolgt ist.

2. Elektrochemischer Akkumulator (A) nach Anspruch 1, welcher als elektrisch isolierendes Element eine ringförmige Scheibe (15) umfasst, die zwischen dem Stromkollektor (14) und dem Boden des Gehäuses angeordnet ist.

3. Elektrochemischer Akkumulator (A) nach Anspruch 1 oder 2, welcher als elektrisch isolierendes Element eine Kunststofffolie (16) umfasst, die den Umfangsrand (20) eines Anodenbandes und eines Kathodenbandes umgibt.

4. Elektrochemischer Akkumulator (A) nach Anspruch 3, wobei die Kunststofffolie aus einem Material hergestellt ist, das aus Polyimid (PI), Polyetherimid (PEI), Polypropylen (PP) und Polyethylen (PE) ausgewählt ist.

5. Elektrochemischer Akkumulator (A) nach Anspruch 1, welcher ein elektrisch isolierendes Teil umfasst, das gleichzeitig den Umfangsrand (20) des Elektrodenbandes und das Ende (21) des Bündels F bedeckt.

6. Elektrochemischer Akkumulator (A) nach einem der vorhergehenden Ansprüche, wobei die verbleibende Dicke in der Bruchinitiierungslinie (142) zwischen 30 µm und 150 µm liegt.

7. Elektrochemischer Akkumulator (A) nach einem der vorhergehenden Ansprüche, wobei die Dicke E der Wand des Bodens (8) für einen Boden aus Material auf Aluminiumbasis zwischen 0,5 und 2,0 mm liegt.

8. Elektrochemischer Akkumulator (A) nach einem der vorhergehenden Ansprüche, wobei der vorbestimmte Schwellenwert des Drucks größer oder gleich 5 bar ist.

9. Elektrochemischer Akkumulator (A) nach einem der vorhergehenden Ansprüche, welcher außerdem einen Entlüftungsdeckel umfasst, dessen Öffnung hervorgerufen wird, sobald der Druck im Inneren einen weiteren vorbestimmten Schwellenwert erreicht.

10. Elektrochemischer Akkumulator (A) nach Anspruch 9, wobei der weitere vorbestimmte Schwellenwert größer als 15 bar ist.

11. Elektrochemischer Akkumulator (A) nach einem der vorhergehenden Ansprüche von zylindrischer Form mit einem Stromkollektor (14) in Form einer Scheibe mit bestimmter Dicke.

12. Elektrochemischer Akkumulator (A) nach Anspruch 11, wobei die Dicke der Scheibe zwischen 0,3 und 0,8 mm liegt.

13. Elektrochemischer Akkumulator (A) nach einem der vorhergehenden Ansprüche, wobei das Gehäuse (8) und der Stromkollektor (14) aus einem Material auf Aluminiumbasis bestehen.

14. Elektrochemischer Akkumulator (A) nach einem der vorhergehenden Ansprüche, welcher dafür ausgelegt ist, nach elektrischer Trennung zwischen dem mit dem Bündel verbundenen Stromkollektor (14) und dem Boden des Gehäuses für eine Höhe des Innendrucks, die einen vorbestimmten Schwellenwert nicht überschreitet, dicht zu bleiben.

15. Elektrochemischer Akkumulator (A) nach Anspruch 14, wobei der vorbestimmte Schwellenwert kleiner oder gleich 12 bar ist.

## Claims

1. An electrochemical lithium battery (A) having an electrochemical bundle (F) comprising at least one electrochemical cell (C) consisting of at least one anode and one cathode on either side of an electrolyte impregnated into a separator, two current collectors, of which one is linked to the anode and the other to the cathode, a casing (6) of a shape that is elongate along a central axis (X), the casing having a cover (9), a bottom (8), a lateral jacket (7) joined both to the bottom and to the cover, the casing being designed to contain the bundle in a sealtight manner while being passed through by a portion of the current collectors forming the poles (40, 50),
the battery furthermore having:
- a current collector in the form of a metal plate (14) the central portion (140) of which is welded to a central portion (80) of the bottom about the axis (X), the collector bearing against the end (21) of the electrochemical bundle, the peripheral portion (141) around the central portion of the collector having a zone of smaller thickness forming a breakage initiation line (142);
- at least one electrical insulation element (15, 16), arranged between the plate forming the collector (14) and the bottom of the casing opposite, around the central portions (80, 140) thereof, in order to electrically insulate said portions from one another,
the thickness of the bottom and the breakage initiation line being dimensioned such that, beyond a predetermined threshold value for the pressure prevailing inside the casing, the bottom undergoes a plastic deformation, preserving the weld between the central portion of the plate and that of the bottom, while generating a breakage of the initiation line, and thereby an irreversible electrical disconnection between the bundle and the bottom of the casing.

2. The electrochemical battery (A) as claimed in claim 1, comprising an annular spacer (15) as electrical insulation element, intercalated between the current collector (14) and the bottom of the casing.

3. The electrochemical battery (A) as claimed in claim 1 or 2, comprising a plastic film (16) as electrical insulation element, surrounding the peripheral edge (20) of the electrode foil.

4. The electrochemical battery (A) as claimed in claim 3, the plastic film being made of a material chosen from polyimide (PI), polyetherimide (PEI), polypropylene (PP) or polyethylene (PE).

5. The electrochemical battery (A) as claimed in claim 1, comprising an electrical insulation component covering both the peripheral edge (20) of the electrode foil and the end (21) of the bundle F.

6. The electrochemical battery (A) as claimed in one of the preceding claims, the remaining thickness in the breakage initiation line (142) being between 30 µm and 150 µm.

7. The electrochemical battery (A) as claimed in one of the preceding claims, the thickness E of the wall of the bottom (8) being between 0.5 and 2.0 mm for a bottom made of aluminum-based material.

8. The electrochemical battery (A) as claimed in one of the preceding claims, the predetermined threshold value for the pressure being greater than or equal to 5 bar.

9. The electrochemical battery (A) as claimed in one of the preceding claims, furthermore comprising a venting seal the opening of which is triggered as soon as the internal pressure reaches another predetermined threshold value.

10. The electrochemical battery (A) as claimed in claim 9, the other predetermined threshold value being greater than 15 bar.

11. The electrochemical battery (A) as claimed in one of the preceding claims, in one of the preceding claims, in the shape of a cylinder with a current collector (14) in the shape of a disk with a thickness.

12. The electrochemical battery (A) as claimed in claim 11, the thickness of the disk being between 0.3 and 0.8 mm.

13. The electrochemical battery (A) as claimed in one of the preceding claims, the casing (8) and the current collector (14) being made of an aluminum-based material.

14. The electrochemical battery (A) as claimed in one of the preceding claims, configured to remain sealed after electrical disconnection between the current collector (14) linked to the bundle and the bottom of the casing for an internal pressure level not exceeding a predetermined threshold value.

15. The electrochemical battery (A) as claimed in claim 14, the predetermined threshold value less than or equal to 12 bar.
